# EUROPÄISCHE PATENTANMELDUNG

(11) **EP 2 042 376 A1**
(43) Veröffentlichungstag der Anmeldung: **01.04.2009**
(21) Anmeldenummer: 08015896.7
(22) Anmeldetag: 10.09.2008
(51) Int. Cl.: B60R 5/04, B60R 21/06

(54) **Schutzvorrichtung für einen Fahrzeuginnenraum**

(30) Priorität: 28.09.2007 DE 102007047758
(71) Anmelder: BOS GmbH & Co. KG, 73760 Ostfildern (DE)
(72) Erfinder: Renz, Günther, 71254 Ditzingen (DE)
(74) Vertreter: Patentanwälte Ruff, Wilhelm, Beier, Dauster & Partner

(57) **Zusammenfassung**

2.1 Eine Schutzvorrichtung für einen Fahrzeuginnenraum mit einem flexiblen Flächengebilde, das an gegenüberliegenden Längsseiten mit Seitenrandbereichen versehen ist, sowie mit einer Wickelwelle, die drehbar gelagert ist und auf der das Flächengebilde auf- und abwickelbar gehalten ist, sowie mit einem formstabilen Auszugprofil, das an einem in Abwickelrichtung vorderen Stirnendbereich des Flächengebildes fest mit dem Flächengebilde verbunden ist, ist bekannt.

2.2 Erfindungsgemäß ist jedem Seitenrandbereich des Flächengebildes wenigstens ein Umlenkführungsmittel zugeordnet, dass kraft- und/oder formschlüssig eine quer zur Auf- oder Abwickelrichtung des Flächengebildes nach außen wirkende Zugkraftkomponente auf den Seitenrandbereich überträgt.

2.3 Einsatz für Personenkraftwagen

## Beschreibung

Die Erfindung betrifft eine Schutzvorrichtung für einen Fahrzeuginnenraum mit einem flexiblen Flächengebilde, das an gegenüberliegenden Längsseiten mit Seitenrandbereichen versehen ist, sowie mit einer Wickelwelle, die drehbar gelagert ist und auf der das Flächengebilde auf-und abwickelbar gehalten ist sowie mit einem formstabilen Auszugprofil, das an einem in Abwickeleinrichtung vorderen Stirnendbereich des Flächengebildes fest mit dem Flächengebilde verbunden ist.

Unter derartigen Schutzvorrichtungen im Sinne der Erfindung sind sowohl Laderaumabdeckungen als auch Trennvorrichtungen zwischen Laderaum und Fahrgastraum zu verstehen. Unter derartige Schutzvorrichtungen fallen zudem auch Sonnenschutzvorrichtungen, die im Bereich von seitlichen, front- oder heckseitigen Fahrzeugscheiben oder an transparenten Dachbereichen des Fahrzeuginnenraumes vorgesehen sind.

Eine allgemein bekannte Sonnenschutzvorrichtung für eine seitliche Fahrzeugscheibe oder für ein Glasschiebedach weist eine fahrzeugseitig drehbar gelagerte Wickelwelle auf, auf der ein flexibles Flächengebilde in Form eines Sonnenschutzrollos auf- und abwickelbar gehalten ist. Ein in Abwickelrichtung vorderer Stirnendbereich des Textilgewirkes ist mit einem Auszugprofil fest verbunden, das formstabil gestaltet ist. Im Ruhezustand ist das Textilgewirke auf die Wickelwelle aufgewickelt. In abgewickeltem Funktionszustand ist das Textilgewirke parallel zu dem zu verdeckenden Glasschiebedach aufgespannt.

Aufgabe der Erfindung ist es, eine Schutzvorrichtung der eingangs genannten Art zu schaffen, die ein faltenfreies Aufwickeln des Flächengebildes auf die Wickelwelle ermöglicht.

Diese Aufgabe wird dadurch gelöst, dass jedem Seitenrandbereich des Flächengebildes wenigstens ein Umlenkführungsmittel zugeordnet ist, das kraft- und/oder formschlüssig eine quer zur Auf- oder Abwickelrichtung des Flächengebildes nach außen wirkende Zugkraftkomponente auf den Seitenrandbereich überträgt. Die wesentliche Idee der vorliegenden Erfindung ist es, räumlich unmittelbar vor einem entsprechenden Aufwickelvorgang eine Querstraffung des Flächengebildes zu erzielen, so dass ein gestrafftes und glattes Aufwickeln des Flächengebildes auf die Wickelwelle ermöglicht ist. Das straffe, glatte und gleichmäßige Aufwickeln ist maßgeblich dafür, dass auch bei häufigem Auf- und Abwickeln immer eine einwandfreie Wickelfunktion erzielbar ist.

In Ausgestaltung der Erfindung ist das wenigstens eine Umlenkführungsmittel benachbart zu der Wickelwelle und insbesondere unmittelbar benachbart zu einem die Wickelwelle umgebenden Aufwickelraum angeordnet. Vorzugsweise ist die Wickelwelle in einem fahrzeugfest angeordneten Kassettengehäuse drehbar gelagert, das den Aufwickelraum einschließt. Vorteilhaft sind die Umlenkführungsmittel dann im Bereich des Kassettengehäuses angeordnet und vorzugsweise an diesem befestigt.

In weiterer Ausgestaltung der Erfindung umfasst jeder Seitenrandbereich eine Seitenrandverstärkung, die - im Querschnitt gesehen - gegenüber einer Aufspannebene des Flächengebildes geneigt ausgerichtet ist. Durch die geneigte und demzufolge abgewinkelte oder gekrümmte Gestaltung der Seitenrandverstärkung gegenüber der Ebene des Flächengebildes, in der das Flächengebilde in abgewickeltem Aufspannungszustand ausgerichtet ist, ermöglicht einen Querkraftangriff, der zu einer Straffung des Flächengebildes führt.

In weiterer Ausgestaltung der Erfindung sind die Umlenkführungsmittel mit Roll- oder Gleitelementen versehen, die an dem jeweiligen Seitenrandbereich und insbesondere an der geneigten Seitenrandverstärkung angreifen. Die Roll- oder Gleitelemente können somit kraft- und/oder formschlüssig eine Querkraft auf das flexible Flächengebilde kurz vor dem Aufwickeln des Flächengebildes auf die Wickelwelle erzielen, wodurch das glattflächige und gestraffte Aufwickeln des Flächengebildes ermöglicht ist.

In weiterer Ausgestaltung der Erfindung umfassen die Umlenkführungsmittel Stützelemente, die als Gegenlager für die Roll- oder Gleitelemente dienen, um eine Führung der Seitenrandbereiche zwischen Stützelementen und Gleit- oder Rollelementen zu bewirken. Dadurch wird die Funktion der Roll- oder Gleitelemente weiter verbessert, da die entsprechenden Seitenrandbereiche des Flächengebildes zwischen Roll- oder Gleitelementen und Stützelementen gehalten sind.

In weiterer Ausgestaltung der Erfindung sind die Roll- oder Gleitelemente oder die Stützelemente kraftbegrenzt nachgiebig gelagert. Diese Kraftbegrenzung gewährleistet, dass keine zu hohen Querkräfte auf das Flächengebilde ausgeübt werden, die zu einer Beschädigung der Textilstruktur des Flächengebildes führen. Vorzugsweise ist das Flächengebilde als Gewebe oder als Gewirke ausgeführt.

In weiterer Ausgestaltung der Erfindung sind die Rollelemente mit zur Auf- oder Abwickelrichtung des Flächengebildes schräggestellten Drehachsen versehen. Die Drehachsen der Rollelemente, die den gegenüberliegenden Seitenrandbereichen des Flächengebildes zugeordnet sind, sind derart spiegelsymmetrisch zu einer Mittellängsachse des Flächengebildes ausgerichtet, dass ein Abwälzen der Rollelemente auf einer Oberfläche des Flächengebildes zwangsläufig eine Schrägführung oder Lenkung der Seitenrandbereiche nach außen bewirkt, wodurch eine gewünschte Zugkraftkomponente quer zur Auf- oder Abwickelrichtung des Flächengebildes nach außen erzielt wird. Dies führt zu einer Querstraffung des gesamtes Gewirkes oder Gewebes auf Höhe dieser Rollelemente, die vorzugsweise unmittelbar benachbart zur Wickelwelle angeordnet sind. Bei einem Aufwickelvorgang wird das Flächengebilde somit in einem räumlichen Bereich, der unmittelbar vor einem entsprechenden Aufwickelraum der Wickelwelle liegt, in Querrichtung gestrafft.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch eine Ausführungsform einer erfindungsgemäßen Schutzvorrichtung in einem Fahrzeuginnenraum eines Personenkraftwagens,
- Fig. 2a: schematisiert die Funktion eines Umlenkführungsmittels bei der Schutzvorrichtung nach Fig. 1 in einer Querschnittsdarstellung,
- Fig. 2b: stark schematisiert die Funktion der Umlenkführungsmittel nach Fig. 2a in einer Draufsicht,
- Fig. 3: einen Ausschnitt einer weiteren Ausführungsform einer erfindungsgemäßen Schutzvorrichtung mit Umlenkführungsmitteln, die benachbart zu einer Wickelwelle für das Flächengebilde vorgesehen sind,
- Fig. 4: in einer Draufsicht schematisch die Funktion eines Umlenkführungsmittels ähnlich Fig. 3,
- Fig. 5a: in schematischer Querschnittsdarstellung einen Ausschnitt einer weiteren Ausführungsform einer erfindungsgemäßen Schutzvorrichtung im Bereich eines Umlenkführungsmittels ähnlich Fig. 2a,
- Fig. 5b: die schematische Funktion des Umlenkführungsmittels nach Fig. 5a in einer Draufsicht,
- Fig. 6a: eine weitere Ausführungsform eines Umlenkführungsmittels ähnlich Fig. 2a, bei der das Umlenkführungsmittel eine Seitenrandverstärkung umgreift,
- Fig. 6b: schematisiert die Funktion des Umlenkführungsmittels nach Fig. 6a in einer Draufsicht,
- Fig. 7a: ein weiteres Umlenkführungsmittel für eine Ausführungsform einer erfindungsgemäßen Schutzvorrichtung in einer schematischen Frontansicht, und
- Fig. 7b: die Umlenkführungsmittel nach Fig. 7a in einer schematisierten Draufsicht.

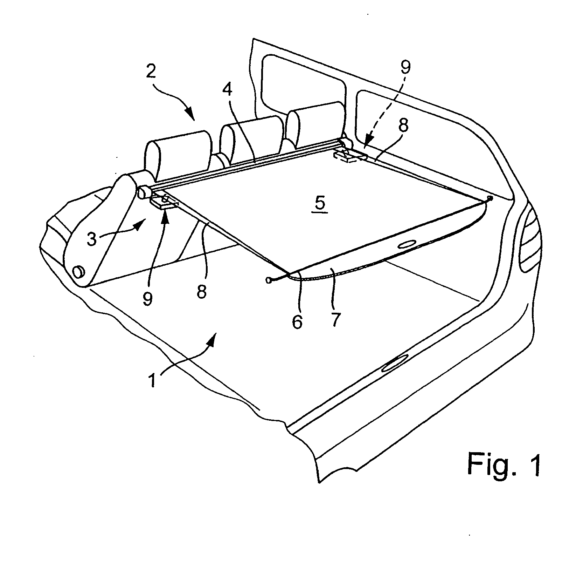

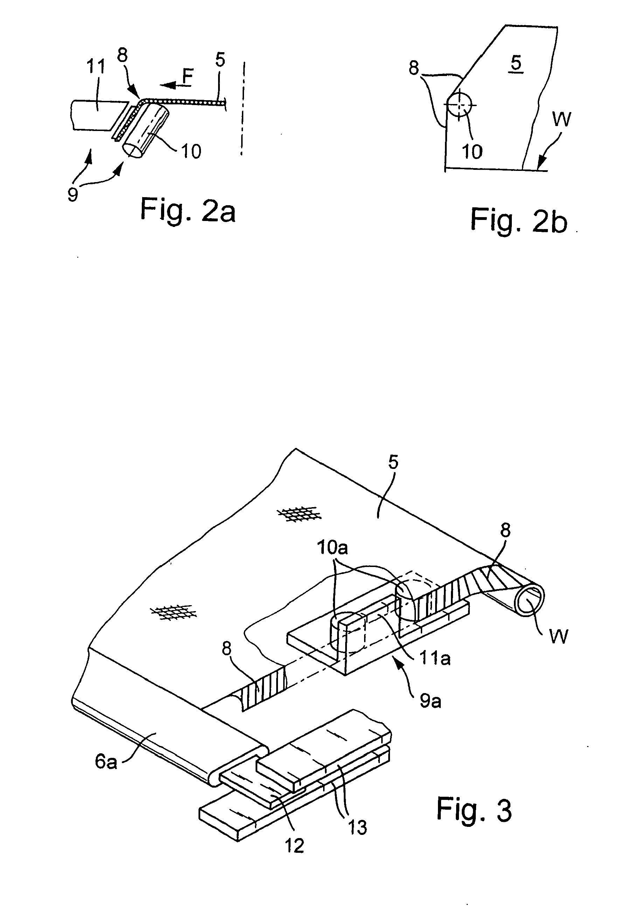

Ein Fahrzeuginnenraum eines Personenkraftwagens gemäß Fig. 1 weist heckseitig einen Laderaum 1 auf, an den in Fahrzeuglängsrichtung nach vorne ein Fahrgastraum 2 anschließt. Der Laderaum 1 wird von dem Fahrgastraum 2 durch eine Rückenlehnenanordnung 3 einer Fondsitzbank getrennt. Unmittelbar hinter der Rückenlehnenanordnung 3 ist eine erfindungsgemäße Schutzvorrichtung angeordnet, die zur etwa horizontalen Abdeckung des Laderaumes 1 dient. Die Schutzvorrichtung weist ein formstabiles Kassettengehäuse 4 auf, das in Fahrzeugquerrichtung erstreckt ist und knapp unterhalb einer Fahrzeugbordkante fahrzeugfest im Laderaum 1 angeordnet ist. In dem Kassettengehäuse 4 ist in grundsätzlich bekannter Weise eine Wickelwelle drehbar gelagert. Die Wickelwelle ist bei der Ausführungsform gemäß Fig. 3 mit dem Bezugszeichen W versehen.

Auf der Wickelwelle ist ein flexibles, biegeschlaffes Flächengebilde 5 auf- und abwickelbar gehalten. Hierzu ist das Flächengebilde 5 mit einem in Aufwickelrichtung vorderen Stirnendbereich auf der Wickelwelle befestigt. An einem in Abwickelrichtung vorderen Stirnendbereich ist das Flächengebilde 5 mit einem Auszugprofil 6 fest verbunden, dem ein formstabiles Konturteil 7 zugeordnet ist. Das Auszugprofil ist heckseitig in grundsätzlich bekannter Weise in laderaumseitige Halteaufnahmen einhängbar und demzufolge in einer ausgezogenen Schutzposition festlegbar. Die Wickelwelle ist durch einen Federmotor in Aufwickelrichtung drehmomentbeaufschlagt, so dass das Flächengebilde 5 nach dem Lösen des Auszugprofils 6 aus den fahrzeugseitigen Halteaufnahmen zwangsläufig und automatisch aufgewickelt und demzufolge in das Kassettengehäuse 4 eingezogen wird. Das Kassettengehäuse 4 weist einen die Wickelwelle umgebenden Aufnahmeraum auf, der so groß gewählt ist, dass das Flächengebilde 5 vollständig innerhalb des Kassettengehäuses 4 aufgewickelt werden kann. Der Austritt des Flächengebildes 5 durch das Kassettengehäuse 4 nach außen erfolgt in grundsätzlich bekannter Weise über einen Längsschlitz im Kassettengehäuse 4, der über nahezu die gesamte Länge des Kassettengehäuses 4 verläuft und etwas größer als eine maximale Breite des Flächengebildes 5 ist.

Das Flächengebilde 5 ist mit gegenüberliegenden Seitenrandverstärkungen 8 versehen, die über die gesamte Länge des Flächengebildes 5 - in Auszugrichtung des Flächengebildes 5 gesehen - die gegenüberliegenden Seitenrandbereiche des Flächengebildes 5 bilden.

Die Seitenrandverstärkungen 8 sind abgewinkelte Seitenrandbereiche, wie anhand der Fig. 2a und 2b erkennbar ist, die zusätzlich mit einem Randstreifen versehen sind, der zur Verstärkung des jeweiligen Seitenrandbereiches dient.

Um zu gewährleisten, dass das Flächengebilde 5 faltenfrei und gestrafft bei einem Aufwickelvorgang auf die Wickelwelle aufgewickelt wird, sind dem Flächengebilde 5 Umlenkführungsmittel 9 zugeordnet (Fig. 1 und 2a, 2b), die auf die verstärkten Seitenrandbereiche des Flächengebildes 5, d.h. auf die Seitenrandverstärkungen 8, Zugkräfte in Querrichtung zu einer Auszug- oder Einfahrrichtung des Flächengebildes 5 aufbringen. Diese Querrichtung entspricht bei einem dargestellten Ausführungsbeispiel durch die Auszugbewegung des Flächengebildes 5 in Fahrzeuglängsrichtung in entsprechender Weise einer Fahrzeugquerrichtung. Die Umlenkführungsmittel 9 sind unmittelbar benachbart zu dem Kassettengehäuse 4 fahrzeugfest bzw. laderaumfest angeordnet. Dabei sind die Umlenkführungsmittel 9 beiden gegenüberliegenden Seitenrandverstärkungen 8 zugeordnet. Jedes Umlenkführungsmittel 9 weist wenigstens ein Rollelement 10 auf, das zur Umlenkung der jeweiligen Seitenrandverstärkung 8 dient. Die Anordnung des Rollelementes 10 ist so gewählt, dass die Seitenrandverstärkung 8 und insbesondere das Flächengebilde 5 bei einer Umlenkung über das wenigstens eine Rollelement 10 gemäß dem Kraftpfeil F (Fig. 2a) in Querrichtung auf Zug beansprucht wird. Bei einem Aufwickelvorgang wird das Flächengebilde 5 somit unmittelbar vor dem einlaufenden Längsschlitz mit seinem jeweils einlaufenden Abschnitt in Querrichtung gestrafft, wobei die gegenüberliegenden Führungsmittel 9 selbstverständlich einander entgegengesetzte Zugkräfte aufbringen. Die Querstraffungsfunktion der Umlenkführungsmittel 9 ist anhand der Fig. 2b schematisch und in übertriebener Weise dargestellt. Mit dem Bezugszeichen W ist die Wickelwelle angedeutet, die in dem Kassettengehäuse 4 gemäß Fig. 1 gelagert ist. Es ist erkennbar, dass die Umlenkung über die Umlenkführungsmittel 10 zu einer Bewegung der Seitenrandverstärkungen 8 nach außen und demzufolge zu einer Querstraffung des Flächengebildes 5 führen. Im Übrigen sind die Umlenkführungsmittel 9 so angeordnet, dass die Seitenrandverstärkungen 8 anschließend parallel zueinander und damit quer zu einer Drehachse der Wickelwelle W aufgewickelt werden. Dadurch, dass die Seitenrandbereiche, d.h. die Seitenrandverstärkungen 8, um einen Winkel von weniger als 90° - relativ zur ebenen Längserstreckung der Seitenrandverstärkungen gesehen - abgewinkelt sind, werden die Seitenrandverstärkungen 8 beim Auflaufen auf die Wickelwelle W zwangsläufig wieder in ihre ebene Ausrichtung überführt, so dass die Seitenrandverstärkungen 8 in übereinanderliegenden Lagen aufgewickelt werden können.

Auf der dem wenigstens einen Rollelement 10 gegenüberliegenden Außenseite jeder Seitenrandverstärkung 8 ist wenigstens ein Stützelement 11 vorgesehen, das verhindert, dass die Seitenrandverstärkung 8 nach außen ausweichen oder von dem Rollelement 10 herabgleiten kann. Zwischen dem Stützelement 11 und dem wenigstens einen Rollelement 10 ergibt sich somit ein Führungsspalt, der die gewünschte Umlenkführung für die Seitenrandverstärkung 8 übernimmt.

Bei der Ausführungsform nach Fig. 3 ist ein Auszugprofil 6a des Flächengebildes 5 über seine gesamte Auszuglänge in laderaumseitigen Längsführungsschienen 13 geführt. Das Flächengebilde 5 kann für eine Auf- oder Abwickelbewegung angetrieben sein, wobei entsprechende Antriebsmittel an dem Auszugprofil 6a angreifen können. Es ist auch möglich, das Flächengebilde 5 manuell zu bewegen. An der Längsführungsfunktion der Längsschienen 13 ändert sich hierdurch nichts. Auch das mit dem Auszugprofil 6a versehene Flächengebilde 5 ist unmittelbar benachbart zur Wickelwelle W mit Umlenkführungsmitteln 9a versehen, die in Ihrer Funktion identisch ausgeführt sind wie die Umlenkführungsmittel 9 gemäß den Figuren 1 bis 2b. Einziger Unterschied ist es, dass bei dieser Ausführungsform nach Fig. 3 ein entsprechender, verstärkter oder nicht verstärkter, Seitenrandbereich 8 des Flächengebildes 5 im Bereich der Umlenkführungsmittel 9a etwa rechtwinklig nach unten abgewinkelt ist. Vorzugsweise weist der Seitenrandbereich 8 eine gewisse Eigenelastizität auf, so dass er sich nach Durchlaufen der Umlenkführungsmittel 9a von selbst wieder in eine zumindest nahezu eben zum übrigen Flächengebilde 5 verlaufende Position bringt. Hierdurch wird das flächige und parallele Aufwickeln der Seitenrandbereiche 8 erleichtert. Die Umlenkführungsmittel 9a weisen zwei Rollelemente 10a auf, denen eine als Stützelement dienende Stützleiste 11a als Gegenlager zugeordnet ist. Auch die Umlenkführungsmittel 9a sind fahrzeugfest bzw. laderaumfest angeordnet.

Gemäß einer vorteilhaften Ausführungsform der Erfindung sind die Umlenkführungsmittel an dem Kassettengehäuse befestigt und können gemeinsam mit diesem aus dem Fahrzeug entnommen werden.

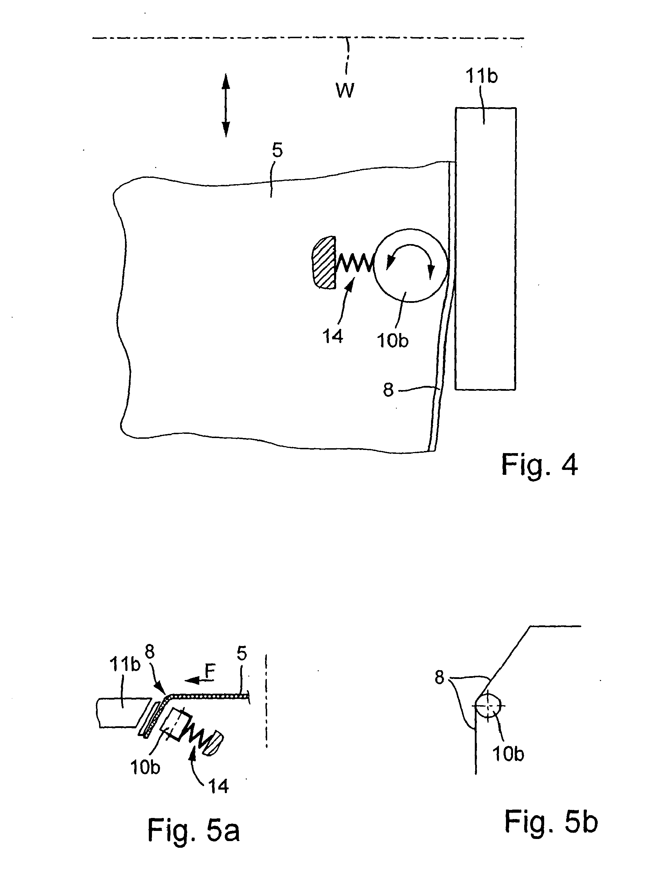

Die grundsätzliche Funktion der Ausführungsform gemäß den Figuren 4 bis 5b entspricht den zuvor beschriebenen Ausführungsformen. Es werden für funktionsgleiche Teile oder Abschnitte die gleichen Bezugszeichen, teilweise unter Hinzufügung des Buchstabens b verwendet. Wesentlicher Unterschied ist es, dass hier das als Anpressrolle dienende Rollelement 10b zusätzlich mittels einer Druckfederanordnung 14 federelastisch in Querrichtung beweglich angeordnet ist. Diese Federanordnung 14 dient als Kraftbegrenzer, da ihre Federkraft quer zur Auszugrichtung des Flächengebildes 5 so bemessen ist, dass auf das Flächengebilde 5 keine zu hohe Querspannung aufgebaut wird, die zu einer Beschädigung des Flächengebildes 5 führen könnte. Mit dem Bezugszeichen W ist erneut eine entsprechende Wickelwelle angedeutet. Bezüglich der weiteren Offenbarung dieser Ausführungsform gemäß den Figuren 4 bis 5b wird zur Vermeidung von Wiederholungen auf die zuvor beschriebenen Ausführungsbeispiele verwiesen. Die Federanordnung 14 stützt sich einerseits an dem quer zur Auszugrichtung, d.h. in Fahrzeugquerrichtung längsbeweglich und drehbar angeordneten Rollelement 10b und andererseits laderaumfest ab.

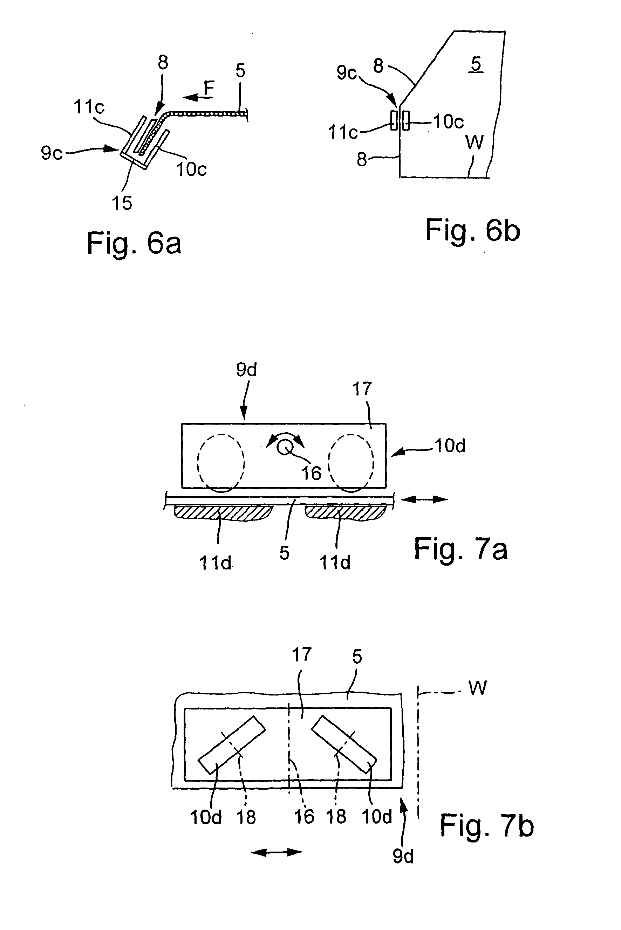

Auch die Ausführungsform nach den Figuren 6a und 6b entspricht von ihrer grundsätzlichen Funktion her der Ausführungsform nach den Figuren 1 bis 2b, so dass ergänzend auf die Offenbarung zu der Ausführungsform nach den Figuren 1 bis 2b verwiesen wird. Wesentlicher Unterschied bei dieser Ausführungsform ist es, dass zur innenseitigen Umlenkung für die Seitenrandverstärkung 8 des Flächengebildes 5 kein Rollelement, sondern vielmehr ein Gleitelement 10c vorgesehen ist. Diesem ist auf der gegenüberliegenden Außenseite der Seitenrandverstärkung 8 ein Stützelement 11 c zugeordnet, dessen Funktion identisch zu der Funktion des Stützelementes 11 gemäß Fig. 2a ist. Das Stützelement 11 c und das Gleitelement 10c sind zudem über einen Quersteg 15 zu einem U-förmigen Hohlprofil miteinander verbunden, so dass sich für die Seitenrandverstärkung 8 im Bereich des Umlenkführungsmittels 9c eine die Seitenrandverstärkung 8 umgreifende Führungsnut ergibt.

Die zuvor beschriebenen Ausführungsformen bewirken eine Umlenkung und Führung der Seitenrandbereiche des Flächengebildes durch entsprechenden Formschluss, indem die Roll- oder Gleitelemente 10 bis 10c die jeweilige Seitenrandverstärkung 8 formschlüssig umlenken.

Bei der Ausführungsform nach den Figuren 7a und 7b wird eine Querstraffung des Flächengebildes 5 durch Umlenkführungsmittel 9d erzielt, die ausschließlich kraftschlüssig auf das Flächengebilde 5 bzw. auf dessen Seitenrandbereiche einwirken. Anhand der Figuren 7a und 7b ist ein Umlenkführungsmittel 9d gezeigt, bei dem Anpressrollen von oben her auf das Flächengebilde 5 bzw. auf einen entsprechenden Seitenrandbereich drücken. Gegenüberliegend im Bereich einer Unterseite des Flächengebildes 5 bzw. der Seitenrandverstärkung sind Stützauflagen 11 d vorgesehen. Wesentliches Merkmal der Umlenkführungsmittel 9d ist es, dass dort jeweils eine Anpressrolle 10d vorgesehen ist, die schräg zur Auszugrichtung des Flächengebildes 5 verläuft. Bei der Ausführungsform gemäß den Figuren 7a und 7b ist jedes Umlenkführungsmittel 9d mit jeweils einer Anpressrolle 10d versehen, die relativ zur Aufwickelrichtung schräg nach außen gestellt ist, sowie mit einer weiteren Anpressrolle 10d, die relativ zur Abwickelrichtung schräg nach außen gestellt ist. Die beiden Anpressrollen 10d sind in einem gemeinsamen Lagerbock drehbar gelagert, der im Bereich eines Gelenkzapfens 16 nach Art einer Wippe kippbar gelagert ist. Je nachdem, in welcher Richtung das Flächengebilde 5 bewegt wird, kommt die eine oder andere Anpressrolle 10d zur Auflage auf den Seitenrandbereich des Flächengebildes 5. Die abhängig von der Laufrichtung des Flächengebildes 5 erfolgende Auflage der einen oder der anderen Anpressrolle wird durch nicht dargestellte Steuermittel mechanisch, elektrisch, pneumatisch oder hydraulisch gesteuert.

Bei einem Aufwickelvorgang wird die in Aufwickelrichtung nach außen schräg gestellte Anpressrolle 10d angepresst, so dass eine entsprechende Aufwickelbewegung des Flächengebildes 5 auf das Flächengebilde 5 zwangsläufig eine Zugkraftkomponente quer zur Aufwickelrichtung nach außen bewirkt. Hierdurch wird die gewünschte Querstraffung des Flächengebildes 5 bewirkt. Das Umlenkführungsmittel 9d ist - wie die zuvor beschriebenen Ausführungsbeispiele - ebenfalls unmittelbar vor einem Einlaufbereich des Flächengebildes 5 im Bereich der Wickelwelle W angeordnet. Auf- und Abwickelrichtung des Flächengebildes 5 sind durch die Doppelpfeile in den Fig. 7a und 7b angedeutet. Die Wickelwelle W ist durch die strichpunktierte Line dargestellt. Selbstverständlich sind entsprechende Umlenkführungsmittel 9d beiden gegenüberliegenden Seitenrandbereichen des Flächengebildes 5 zugeordnet, um eine gleichzeitige und symmetrische Querstraffung des Flächengebildes 5 zu erzielen.

Die Anpressrollen 10d sind um Drehachsen 18 in dem Lagerbock 17 frei drehbeweglich gelagert, die zur Auf- und Abwickelrichtung des Flächengebildes 5 schräggestellt sind.

## Patentansprüche

1. Schutzvorrichtung für einen Fahrzeuginnenraum mit einem flexiblen Flächengebilde, das an gegenüberliegenden Längsseiten mit Seitenrandbereichen versehen ist, sowie mit einer Wickelwelle, die drehbar gelagert ist und auf der das Flächengebilde auf- und abwickelbar gehalten ist, sowie mit einem formstabilen Auszugprofil, das an einem in Abwickelrichtung vorderen Stirnendbereich des Flächengebildes fest mit dem Flächengebilde verbunden ist, **dadurch gekennzeichnet, dass** jedem Seitenrandbereich (8) des Flächengebildes (5) wenigstens ein Umlenkführungsmittel (9 bis 9d) zugeordnet ist, das kraft- und/oder formschlüssig eine quer zur Auf- oder Abwickelrichtung des Flächengebildes (5) nach außen wirkende Zugkraftkomponente auf den Seitenrandbereich (8) überträgt.

2. Schutzvorrichtung nach Anspruch 1, **dadurch gekennzeichnet, dass** das wenigstens eine Umlenkführungsmittel (9 bis 9d) benachbart zu der Wickelwelle (W) und insbesondere unmittelbar benachbart zu einem die Wickelwelle (W) umgebenden Aufwickelraum angeordnet ist.

3. Schutzvorrichtung nach Anspruch 1, **dadurch gekennzeichnet, dass** jeder Seitenrandbereich eine Seitenrandverstärkung (8) umfasst, die - im Querschnitt gesehen - gegenüber einer Aufspannebene des Flächengebildes (5) geneigt ausgerichtet ist.

4. Schutzvorrichtung nach Anspruch 1, **dadurch gekennzeichnet, dass** die Umlenkführungsmittel (9 bis 9d) mit Roll- oder Gleitelementen (10 bis 10d) versehen sind, die an dem jeweiligen Seitenrandbereich und insbesondere an der geneigten Seitenrandverstärkung (8) angreifen.

5. Schutzvorrichtung nach Anspruch 4, **dadurch gekennzeichnet, dass** die Umlenkführungsmittel (9 bis 9d) Stützelemente (11 bis 11d) umfassen, die als Gegenlager für die Roll- oder Gleitelemente (10 bis 10d) dienen, um eine Führung der Seitenrandbereiche (8) zwischen Stützelementen und Gleit- oder Rollelementen zu bewirken.

6. Schutzvorrichtung nach Anspruch 4, **dadurch gekennzeichnet, dass** die Roll- oder Gleitelemente (10b) kraftbegrenzt nachgiebig gelagert sind.

7. Schutzvorrichtung nach Anspruch 4, **dadurch gekennzeichnet, dass** die Rollelemente (10d) mit zur Auf- oder Abwickelrichtung des Flächengebildes (5) schräg gestellten Drehachsen (18) versehen sind.
